# EUROPEAN PATENT APPLICATION

(11) **EP 1 506 717 A1**
(43) Date of publication of application: **16.02.2005**
(21) Application number: 04460035.1
(22) Date of filing: 26.07.2004
(51) Int. Cl.: A23L 2/60, A23L 2/02, A23L 1/09

(54) **A method of producing alcohol-free beverage and alcohol-free beverage**

(30) Priority: 13.08.2003 PL 36164603
(71) Applicant: Cargill ( Polska) Spolka z o.o, 55-040 Kobierzyce (PL)
(72) Inventor: Musial, Dariusz, 50-361 Wroclaw (PL); Romaniuk, Jacek, 51-663 Wroclaw (PL); Winecka, Alicja, 53-407 Wroclaw (PL)
(74) Representative: Rejman, Tadeusz (PL)

(57) **Abstract**

The object of the invention is the method of producing alcohol-free beverage intended for consumption without any limitations and alcohol-free beverage.

The method of producing alcohol-free beverage of the invention, characterized in that the following are blended with water: emulsion for beverage and/or fruit juice, flavours, citric acid and, if required, preservatives, wherein to the mixture obtained a carbohydrates composition is added, advantageously in the form of glucose - fructose syrup. The carbohydrates composition contains: 35 - 60% fructose by weight, 35 - 60% glucose by weight, 0.1 - 10% maltose by weight and 0.1 - 5% maltotriose. The sum of the fructose and glucose contents is at least 80% by weight.

The alcohol-free beverage containing emulsion for beverage and/or fruit juice, flavour and, if required, preservatives, wherein it contains the carbohydrates composition of the make-up: 35 - 60% fructose by weight, 35-60% glucose by weight, 0.1 - 10% maltose by weight and 0.1 - 5% maltotriose.

## Description

The object of the invention makes the method of producing alcohol-free beverage intended for consumption without any limitations and alcohol-free beverage.

An alcohol-free beverage of a reduced content of compounds resulting in sensorily defective tones and thus of an enhanced seasoning stability as set forth in the patent application description No P-302300 published in the Bulletin of the Patent Office of the Republic of Poland No 17 of 1994 is known. This beverage contains 20 - 100% by weight, advantageously 40 - 100% vegeteble juice by weight, 2 to 16g per 100g, advantageously 4 to 16g per 100g extract, whereby the ratio of the total content of extract as expressed in g/100g to the total content of acids, calculated as g/100g citric acid, is 5 to 500, the pH value of this beverage being 2.8 to 5.2.

Also known is a beverage, a concentrate composition and a method of producing the beverage as presented in the patent application description published in the Patent Office Bulletin No 13 of 2000. This beverage is made on the basis of caffeine, ascorbic acid, iron in the ionic and/or complexly bonded form, organic and mineral edible acids, mineral salts, sweetening substances, auxiliary substances, vitamines and flavour substances and water. This beverage contains all the aforementioned substances in a uniform mixture or solution. Besides, it contains 3,5,5-trimethylhexanal.

The method of producing alcohol-free beverage of the invention, wherein the following are blended with water: emulsion for beverage and/or fruit juice, flavours, citric acid and, if required, preservatives, wherein to the mixture obtained a carbohydrates composition, advantageously in the form of glusoce-fructose syrup, is added. The carbohydrates composition contains: 35 - 60% fructose by weight, 35 - 60% glucose by weight, 0.1 - 10% maltose by weight and 0.1 - 5% maltotriose. The sum of the fructose and glucose contents is at least 80% by weight.

The alcohol-free beverage containing the emulsion for the beverage and/or fruit juice, flavours, citric acid and, if required, preservatives, wherein it contains
the carbohydrates composition of the following make-up: 35 - 60% fructose by weight, 35 - 60% glucose by weight, 0.1 - 10% maltose by weight and 0.1 - 5% maltotriose.

The method and the beverage of the invention are characterized by a considerably shorter engineering process for its production since the dissolution and filtration stages are bypassed. This has been obtained owing to the use of glucose - fructose syrup that is in a liquid form and does not require such engineering process as dissolution and filtration. A next, favourable effect of the use of the said syrup is the obtainment of a clear solution.

The method of the invention is explained in details following the example of its execution.

The first stage of the alcohol-free beverage is the metering of the glucose-fructose syrup from the syrup store-room to the prouction tank provided with a mixing bar. The syrup has the following compostion:
- glucose: 42% by weight
- fructose: 50% by weight
- other sugars: 8% by weight.

Next, one half of the water amount is metered, which should be used according to the recipe. During the mixing, samples are taken and the content of sugars using a refractometer is measured. The remaining part of water is used to prepare the solutions: citric acid, flavour, emulsion and preservatives. Those solutions are prepared in the preparatory tank whereupon they are pumped over to the production tank. The production line is rinsed in order to transfer the solution fully. Upon adding citric acid, flavour, emulsion, concentrate and preservative, and upon blending the whole substance in the tank, samples are taken and the content of sugars is determined. Afterwards, the remaining, resulting from the recipe, portion of water is metered. A next stage is the venting and the homogenization of the beverage whereupon the beverage is directed to the pasteurizer. Upon pasteurization, the beverage is cooled down to the temperature of 25°C. Next, once again, samples are taken and the sugar contents and the acidicity are determined, and the beverage undergoes the organoleptic testing. In case of the positive testing results, the beverage is directed to the bottling plant in unit packages. If a gas-containing beverage has to be the production object, then it is saturated with carbon dioxide during the bottling operation.

## Claims

1. A method of producing alcohol-free beverage, wherein the following are blended with water: emulsion for beverage and/or fruit juice, flavours, citric acid and, if necessary, preservatives and fruit juice, **characterized in that** a carbohydrates composition is added to the mixture obtained, advantageously in the form of glucose-fructose syrup.

2. A method of claim 1, **characterized in that** the carbohydrates composition contains: 35 - 60% fructose by weight, 35 - 60% glucose by weight, 0.1 - 10% maltose by weight and 0.1 - 5% maltotriose.

3. A method of claim 2, **characterized in that** the sum of the fructose and glucose contents is at least 80% by weight.

4. Alcohol-free beverage containing the emulsion for beverage and/or fruit juice, flavours, citric acid and, if required, preservatives, **characterized in that** it contains the carbohydrates composition of the make-up: 35 - 60% fructose by weight, 35 - 60% glucose by weight, 0.1 - 10% maltose by weight and 0.1 - 5% maltotriose.
